# EUROPEAN PATENT APPLICATION

(11) **EP 4 733 120 A1**
(43) Date of publication of application: **29.04.2026**
(21) Application number: 24208089.3
(22) Date of filing: 22.10.2024
(51) Int. Cl.: B60L 3/12, B60L 15/20, B60L 50/75, B60L 58/32, B60L 58/40

(54) **A COMPUTER SYSTEM AND A METHOD FOR CONTROLLING A FUEL CELL SYSTEM**

(71) Applicant: Volvo Truck Corporation, 405 08 Göteborg (SE)
(72) Inventor: ARYA, Pranav, 412 85 GÖTEBORG (SE); CACIC, Toni, 422 41 HISINGS BACKA (SE)
(74) Representative: Kransell & Wennborg KB

(57) **Abstract**

A computer system (1) and method for controlling a power system (2) comprising a fuel cell system (5) in which a power conversion and distribution circuitry (3) is configured to convert and deliver electric power to an electric energy storage system (30) and to a power consumer (40). The method comprises:
- predicting a power request for power delivery from the fuel cell system,
- monitoring operating voltage of the power system,
- detecting an upcoming event during which a power capability of the fuel cell system is expected to be insufficient to deliver power in accordance with the power request,
- determining if a selection criterion for selecting a first operating mode is fulfilled, in which a temporarily increased output current from the fuel cell system is enabled to comply with the predicted power request, and
- activating the first operating mode when the selection criterion is fulfilled.

## Description

### TECHNICAL FIELD

The disclosure relates generally to fuel cell systems. In particular aspects, the disclosure relates to a computer system and a computer-implemented method for controlling a fuel cell system, and a power system comprising the fuel cell system. The disclosure can be applied to heavy-duty vehicles, such as trucks, buses, and construction equipment, among other vehicle types. The disclosure may also be applied to marine vessels and to stationary fuel cell systems, such as in stationary power plants. Although the disclosure may be described with respect to a particular vehicle, the disclosure is not restricted to any particular vehicle.

### BACKGROUND

A fuel cell system is typically designed to deliver output power at a specific voltage range, referred to as a nominal voltage range of the fuel cell system. When operated in the nominal voltage range, the fuel cell system is able to deliver maximum power in accordance with a power capability of the fuel cell system. When the fuel cell system is operated at voltages below the nominal voltage range, it is usually derated to provide lower output power and to thereby prevent components from overheating due to high output currents. This may typically be realized by limiting the output current.

To maintain vehicle performance in vehicles powered by hybrid fuel cell systems comprising a fuel cell system and a battery, it would be desirable to enhance the power capability at voltages below the nominal voltage of the fuel cell system.

### SUMMARY

According to a first aspect of the disclosure, a computer system comprising processing circuitry configured to control a power system comprising a fuel cell system and an electric energy storage system is provided. The fuel cell system comprises a power conversion and distribution circuitry configured to convert and deliver electric power generated by the fuel cell system to the electric energy storage system and to a power consumer. The processing circuitry is configured to:
predict a power request for power delivery from the fuel cell system,
monitor an operating voltage of the power system,
detect, based on the monitored operating voltage, an upcoming event during which a power capability of the fuel cell system is expected to be insufficient to deliver power in accordance with the predicted power request,
determine if a selection criterion for selecting a first operating mode of the fuel cell system during the upcoming event is fulfilled, wherein, in the first operating mode, a temporarily increased output current from the fuel cell system is enabled to comply with the predicted power request, and
activate the first operating mode in response to determining that the selection criterion is fulfilled.

The first aspect of the disclosure may seek to provide an in at least some aspect improved computer system for controlling a power system, such as in a vehicle. In particular, it may seek to provide a computer system that may improve the possibilities to operate the fuel cell system with an increased power capability during a limited time period, such as in connection with a steep uphill climb, without adversely affecting service life of components of the fuel cell system. A technical benefit may include the possibility to temporarily deliver power in accordance with the power request, even if the operating voltage of the power system, and hence of the fuel cell system, is below the nominal operating voltage of the fuel cell system. The first operating mode may be referred to as a power boost mode.

In the present disclosure, the fuel cell system may comprise at least one fuel cell stack, in turn comprising a plurality of fuel cells. The power conversion and distribution circuitry may comprise at least one power converter, such as a DC/DC converter, and power distribution components such as electric connectors, wires, cables, at least one busbar, etc. The fuel cell system may comprise further subsystems and components, such as a cooling system, a fuel supply system, a compressor, a humidifier, etc. A power system including the electric energy storage system and the fuel cell system may sometimes be referred to as a hybrid fuel cell system.

The power capability of the fuel cell system refers to the maximum amount of electric power that the fuel cell system can generate and deliver under specific operating conditions.

Optionally in some examples, including in at least one preferred example, the processing circuitry is configured to determine if the selection criterion is fulfilled by predicting a power capability of the fuel cell system in the first operating mode, and determining a maximum duration of the first operating mode, wherein the selection criterion is fulfilled when the predicted power capability and the determined maximum duration are sufficient to comply with the predicted power request during the upcoming event. A technical benefit may include the ability to activate the first operating mode only when it will result in that the power request can be complied with. Hence, wear on the fuel cell system resulting from operating it in the first operating mode may be avoided in situations when it will not be possible to comply with the power request throughout the upcoming event. The maximum duration is the maximum time during which the fuel cell system can be operated in the first operating mode.

Optionally in some examples, including in at least one preferred example, the processing circuitry is further configured to determine if the selection criterion is fulfilled by predicting a cooling capability for the power conversion and distribution circuitry during the upcoming event, wherein the determination of the maximum duration is further based on the predicted cooling capability. A technical benefit may include an improved prediction of the maximum duration.

Optionally in some examples, including in at least one preferred example, the processing circuitry is configured to determine the maximum duration by predicting a point in time at which the temperature of the power conversion and distribution circuitry is expected to reach a predetermined temperature threshold above its nominal temperature, i.e., above the nominal temperature of the power conversion and distribution circuitry. A technical benefit may include an improved ability to maintain the temperature of the power conversion and distribution circuitry within a temperature range that does not severely impair service life of the components.

Optionally in some examples, including in at least one preferred example, the processing circuitry is configured to, in response to determining that the selection criterion is not fulfilled, activate a second operating mode in which power produced by the fuel cell system is used for charging the electric energy storage system prior to the detected upcoming event. A technical benefit may include increased possibilities to comply with the predicted power request by charging the electric energy storage system in advance, thereby reducing the risk of power shortages during the predicted event.

Optionally in some examples, including in at least one preferred example, in the first operating mode, the fuel cell system is temporarily operated at a temperature above the nominal temperature of the power conversion and distribution circuitry and/or at an operating voltage below the nominal operating voltage of the fuel cell system. A technical benefit may include an ability to comply with the power request when the fuel cell system is forced to operate at an operating voltage below its nominal operating voltage, such as when a state-of-charge (SoC) of the electric energy storage system is low.

Optionally in some examples, including in at least one preferred example, the processing circuitry is configured to detect the upcoming event by predicting, based on the monitored operating voltage and the predicted power request, an expected operating voltage of the power system during the upcoming event. A technical benefit may include an accurate detection of an upcoming event during which the fuel cell system will not be able to comply with the power request. The monitored operating voltage is indicative of the SoC of the electric energy storage system.

Optionally in some examples, including in at least one preferred example, the processing circuitry is further configured to monitor the temperature of the power conversion and distribution circuitry. A technical benefit may include real-time thermal monitoring, allowing for effective management of the power conversion and distribution circuitry's temperature to avoid overheating.

Optionally in some examples, including in at least one preferred example, the fuel cell system is adapted to deliver power contributing to the propulsion of a vehicle, and the processing circuitry is configured to predict the power request by: receiving vehicle related information comprising at least one of traffic information for an expected travelling route of the vehicle during a future prediction horizon, terrain information for the expected travelling route, topographic information for the expected travelling route during the future prediction horizon, weather information for the expected travelling route during the future prediction horizon, and vehicle gross weight information; and using said received vehicle related information for predicting the power request during the prediction horizon. One or more of the above vehicle related pieces of information may result in that the power request is predicted in an appropriate manner.

Optionally in some examples, including in at least one preferred example, the processing circuitry is further configured to predict the power request by receiving battery information indicative of at least one of a current state-of-charge and an expected energy capacity of the electric energy storage system during the prediction horizon, and using the received battery information for predicting the power request during the prediction horizon. The battery information may for instance provide information indicative of whether or not it is possible to operate the fuel cell system to charge the electric energy storage system. The actual operation of the fuel cell system during the prediction horizon may be dependent on whether the electric energy storage system can be charged. As such, information as regards the electric energy storage system may be used to adequately predict the power request.

According to a second aspect of the disclosure, a power system comprising a fuel cell system, an electric energy storage system, and the computer system of the first aspect is provided. The fuel cell system comprises a power conversion and distribution circuitry configured to convert and deliver electric power generated by the fuel cell system to the electric energy storage system and to a power consumer.

The second aspect of the disclosure may seek to provide an in at least some aspect improved power system. A technical benefit may include a power system having an improved ability to provide operating power in accordance with the power request, also when the SoC of the electric energy storage system is low and the output voltage is below the nominal operating voltage of the fuel cell system.

The power system may be a power system of a vehicle, wherein the power consumer may be an electric propulsion system of the vehicle, or the power system of a power plant or of another stationary application. The electric energy storage system may be configured to store electric energy produced by the fuel cell system, such as for use by the power consumer during peak loads as a complement to the electric power supplied from the fuel cell system.

Optionally in some examples, including in at least one preferred example, the power system further comprises a cooling system configured to cool at least the power conversion and distribution circuitry. A technical benefit may include improved thermal management of the power system, which can increase the duration of the time periods in which the fuel cell system can be operated in the first operating mode, hence improving the conditions for providing an extended power boost.

Optionally in some examples, including in at least one preferred example, the power system further comprises a temperature sensor arranged to measure the temperature of at least one electrical connector within the power conversion and distribution circuitry, such as of a busbar. A technical benefit may include more accurate temperature monitoring of critical components within the power conversion and distribution circuitry, resulting in a better prediction of, e.g., the state-of-health of those components.

According to a third aspect of the disclosure, a vehicle comprising the power system of the second aspect is provided. The vehicle may be a heavy-duty vehicle such as a bus or a truck.

According to a fourth aspect of the disclosure, a computer implemented method for controlling a power system comprising a fuel cell system and an electric energy storage system is provided. The fuel cell system comprises a power conversion and distribution circuitry configured to convert and deliver electric power generated by the fuel cell system to the electric energy storage system and to a power consume. The method comprising:
predicting, by processing circuitry of a computer system, a power request for power delivery from the fuel cell system,
monitoring, by the processing circuitry, an operating voltage of the power system,
detecting, by the processing circuitry, based on the monitored operating voltage, an upcoming event during which a power capability of the fuel cell system is expected to be insufficient to deliver power in accordance with the predicted power request,
determining, by the processing circuitry, if a selection criterion for selecting a first operating mode of the fuel cell system during the upcoming event is fulfilled, wherein, in the first operating mode, a temporarily increased output current from the fuel cell system is enabled to comply with the predicted power request, and
activating, by the processing device, the first operating mode in response to determining that the selection criterion is fulfilled.

The method of the fourth aspect is associated with the above discussed technical benefits of the computer system according to the first aspect.

Optionally in some examples, including in at least one preferred example, the determining if the selection criterion is fulfilled comprises predicting a power capability of the fuel cell system in the first operating mode, and determining a maximum duration of the first operating mode, wherein the selection criterion is fulfilled when the predicted power capability and the determined maximum duration are sufficient to comply with the predicted power request during the upcoming event.

Optionally in some examples, including in at least one preferred example, the determining if the selection criterion is fulfilled further comprises predicting a cooling capability for the power conversion and distribution circuitry during the upcoming event, wherein the determination of the maximum duration is further based on the predicted cooling capability.

Optionally in some examples, including in at least one preferred example, the determining of the maximum duration comprises predicting a point in time at which the temperature of the power conversion and distribution circuitry is expected to reach a predetermined temperature threshold above its nominal temperature.

Optionally in some examples, including in at least one preferred example, in response to determining that the selection criterion is not fulfilled, the method comprises activating a second operating mode in which power produced by the fuel cell system is used for charging the electric energy storage system prior to the detected upcoming event.

Optionally in some examples, including in at least one preferred example, in the first operating mode, the fuel cell system is temporarily operated at a temperature above the nominal temperature of the power conversion and distribution circuitry and/or at an operating voltage below the nominal voltage of the fuel cell system.

Optionally in some examples, including in at least one preferred example, the detecting of the upcoming event comprises predicting, based on the monitored operating voltage and the predicted power request, an expected operating voltage of the power system during the upcoming event.

Optionally in some examples, including in at least one preferred example, the method further comprises monitoring a temperature of the power conversion and distribution circuitry.

The disclosed aspects, examples (including any preferred examples), and/or accompanying claims may be suitably combined with each other as would be apparent to anyone of ordinary skill in the art. Additional features and advantages are disclosed in the following description, claims, and drawings, and in part will be readily apparent therefrom to those skilled in the art or recognized by practicing the disclosure as described herein.

There are also disclosed herein computer systems, control units, code modules, computer-implemented methods, computer readable media, and computer program products associated with the above discussed technical benefits.

### BRIEF DESCRIPTION OF THE DRAWINGS

Examples are described in more detail below with reference to the appended drawings. The drawings are schematic and are not drawn to scale.
**FIG. 1** is an exemplary vehicle according to an example.
**FIG. 2** is an exemplary system diagram of a power system according to an example.
**FIG. 3** is a flow-chart illustrating a method according to an example.
**FIG. 4** is a diagram illustrating power as a function of voltage in a power system according to an example.
**FIG. 5** illustrates an exemplary vehicle travelling along a travelling route according to an example.
**FIG. 6** is a schematic diagram of an exemplary computer system for implementing examples disclosed herein, according to an example.

### DETAILED DESCRIPTION

The detailed description set forth below provides information and examples of the disclosed technology with sufficient detail to enable those skilled in the art to practice the disclosure.

A fuel cell system is typically designed to deliver output power at a specific voltage range, referred to as a nominal voltage range of the fuel cell system. When operated in the nominal voltage range, the fuel cell system is able to deliver maximum power in accordance with a power capability of the fuel cell system. When the fuel cell system is operated at voltages below the nominal voltage range, it is usually derated to provide lower output power and to thereby prevent components of a power conversion and distribution circuitry of the fuel cell system from overheating due to high output currents. This may typically be realized by limiting the output current.

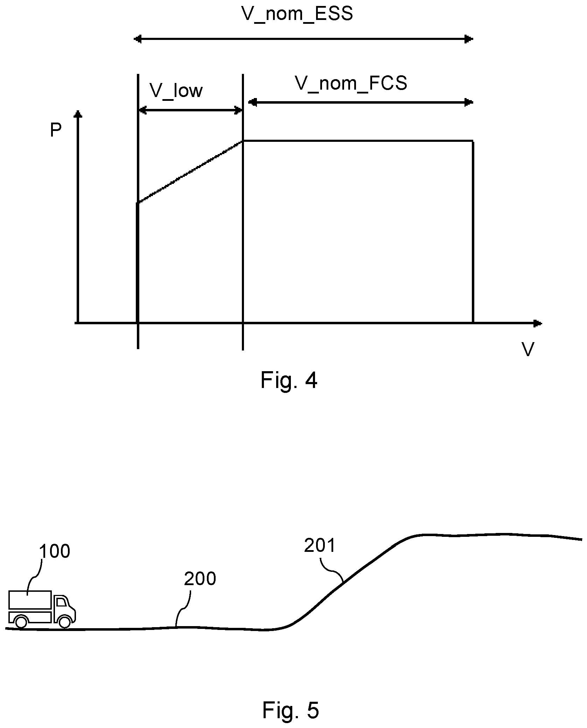

Electric energy storage systems comprising batteries used together with fuel cell systems in power systems, such as in hybrid fuel cell systems, generally have a wider nominal voltage range than the fuel cell system itself. This is schematically illustrated in **FIG. 4****,** showing output power P as a function of voltage V for a fuel cell system and a battery, wherein V_nom_FCS is the nominal voltage operating range for a fuel cell system and V_nom_ESS is the nominal voltage operating range for a battery. The output voltage of a battery decreases with its state-of-charge (SoC). Therefore, when the SoC of the battery is low, the voltage may decrease to values below the nominal voltage range of the fuel cell system. In this low voltage range V_low, the fuel cell system may typically be derated as discussed above, until the battery can be recharged and once again operated in the nominal voltage range of the fuel cell system. Recharging may be carried out by directing power generated by the fuel cell system to the battery as long as a power request from a power consumer, such as the propulsion system of the vehicle, is relatively low. However, the derating may cause problems in, e.g., hill climbs when a relatively high output power is requested by the propulsion system.

According to the present disclosure, challenging situations in which the power system may not be able to deliver sufficient output power to the power consumer, such as to the electric propulsion system of a vehicle, are predicted, and it is determined whether a limited overheating of components within the power conversion and distribution circuitry of the fuel cell system may be temporarily allowed, such that power delivery in accordance with a power request from the power consumer is temporarily enabled.

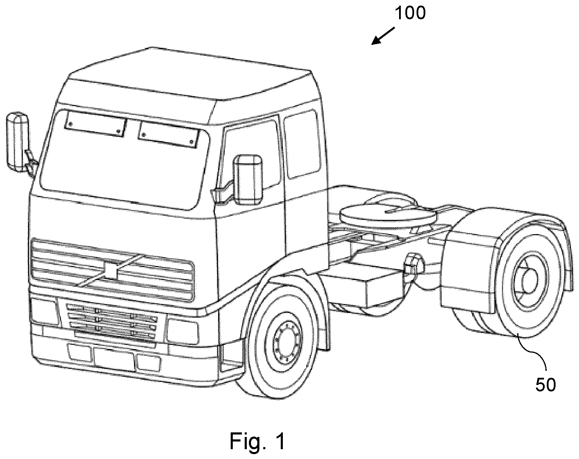

**FIG. 1** is an exemplary vehicle 100 according to an example. The vehicle is in the illustrated example a heavy-duty towing truck. It shall however be noted that the vehicle may be any other kind of vehicle, such as a bus, a construction equipment, e.g. a wheel loader, an excavator etc., or a passenger car. The vehicle may in some embodiments be in the form of a marine vessel. The vehicle may be an autonomous vehicle, i.e. a self-driving vehicle, and/or the vehicle may be arranged to be operated by a driver. The driver may be an on-board driver and/or an off-board driver which controls the vehicle from a remote location. The vehicle 100 comprises an electric propulsion system for providing propulsion force to ground engaging members 50 of the vehicle 100. The ground engaging members 50 are herein a pair of wheels. However, in other embodiments, crawler members may be used in addition or as an alternative. The vehicle further comprises a power system as will be further described below for providing electric power to the electric propulsion system.

The vehicle 100 may further comprise a navigation system comprising one or more receivers and/or sensors, such as a global positioning system (GPS) receiver, an accelerometer, etc. The navigation system may be configured to determine a geographic location and position of the vehicle 100 and to provide data relating to a planned travelling route of the vehicle 100.

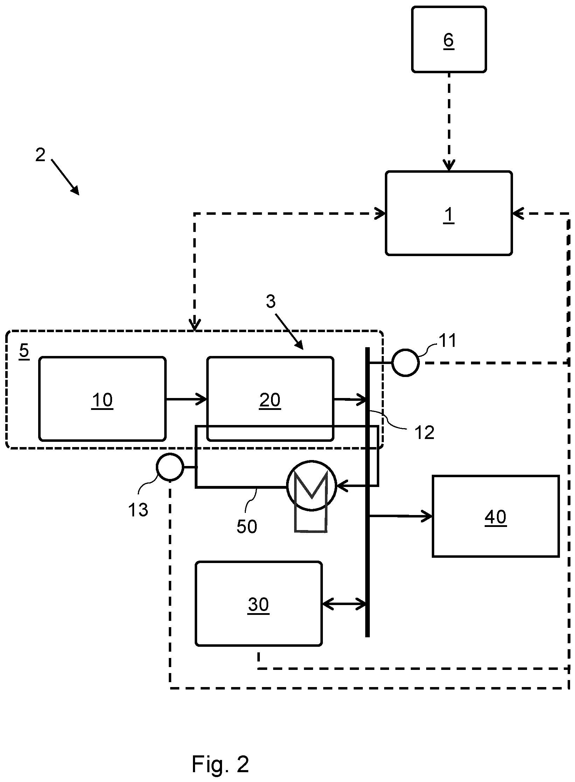

**FIG. 2** is a system diagram of a power system 2 according to an example. The power system 2 is configured to deliver output power to a power consumer 40, such as the electric propulsion system of the vehicle 100 illustrated in FIG. 1. The power system 2 comprises a fuel cell system 5 comprising a fuel cell stack 10 and a power conversion and distribution circuitry 3, and an electric energy storage system 30. The power conversion and distribution circuitry 3 is configured to convert and distribute electric power generated by the fuel cell stack 10 to the electric energy storage system 30 and to the power consumer 40, depending on, e.g., a current power request from the power consumer 40. The power conversion and distribution circuitry 3 comprises at least a power converter 20 configured to convert the electric power generated by the fuel cell stack 10, such as a DC/DC converter, and a busbar arrangement 12, comprising at least one busbar, to which both the power converter 20 and the electric energy storage system 30 are electrically connected. Of course, the busbar arrangement 12 may comprise a plurality of busbars, such as at least one positive busbar and one negative busbar. The DC/DC converter 20 converts low-voltage DC output power from the fuel cell stack 10 to high-voltage DC output power usable by the power consumer 40 for propulsion of the vehicle 100 and for charging of the electric energy storage system 30. The output voltage of the DC/DC converter 20 should therefore match that of the electric energy storage system 30. Hence, when the SoC of the electric energy storage system 30 decreases and the output voltage from the electric energy storage system 30 drops, the DC/DC converter 20 needs to operate at an output voltage below the nominal operating voltage of the fuel cell system 5. By the nominal operating voltage of the fuel cell system 5 is herein intended the nominal output voltage of the DC/DC converter 20. The nominal operating voltage may be a nominal operating voltage range, such as illustrated in **FIG. 4****.**

The fuel cell system 5 may comprise a plurality of fuel cell stacks 10. Each fuel cell stack 10 may in turn comprise a plurality of fuel cells, configured to generate electric power by an electrochemical reaction between a fuel, such as hydrogen, and an oxidizer, such as air, in a known manner. This electric power can be used to power various power consumers 40 of the vehicle 100 directly, such as at least one electric machine, a power steering system, an electro-mechanical service brake system, and so on. Parts or all of the electric power generated by the fuel cell stack 10 can also be stored in the electric energy storage system 30, located on-board the vehicle 100. The electric energy storage system 30 may comprise one or more batteries, and it may be used to provide electric power to the power consumer 40 during peak loads, when the electric power generated by the fuel cell stack 10 is insufficient to comply with a power request from the power consumer 40.

The fuel cell system 5 may comprise a plurality of additional components and sub-systems, such as a fuel supply system, a compressor, a humidifier, a condenser, etc., which will not be further described herein. The cooling system may form part of a cooling system of the vehicle, or it may be a separate cooling system. Although the illustrated cooling system 50 comprises a single cooling loop, the cooling system may in some examples comprise several cooling loops, such as one for cooling the power and distribution circuitry 3 and one for cooling the fuel cell stack 10. A cooling system 50, configured to cool at least the power and distribution circuitry 3, may form part of the fuel cell system 5 or may be a separate cooling system of the vehicle 100. A first temperature sensor 11 may be arranged on the busbar 12, and/or a second temperature sensor 13 may be arranged within the cooling system 50. For example, as illustrated in FIG. 2, the second temperature sensor 13 may be arranged for measuring a temperature of coolant supplied to the DC/DC converter 20 via the cooling system 50.

The power system 2 further comprises an electronic control device 1, such as a computer system comprising processing circuitry, configured to control operation of the power system 2. The control device 1 may be configured to receive measurement data from the temperature sensors 11, 13. It may further be configured to obtain data relating to an operating voltage of the power system 2, from the electric energy storage system 30 and/or from the fuel cell system 5. When the power system 2 is located in a vehicle 100, the control device 1 may be located on-board the vehicle. Alternatively, the electronic control device 1 may comprise on-board and off-board units configured to be communicatively connected to one another, e.g., via a wireless connection. The electronic control device 1 may further be configured to receive data from other sources, such as from a navigation system 6 of the vehicle 100, and/or from remote sources such as from a remote server or a cloud environment using a wireless connection of the vehicle 100.

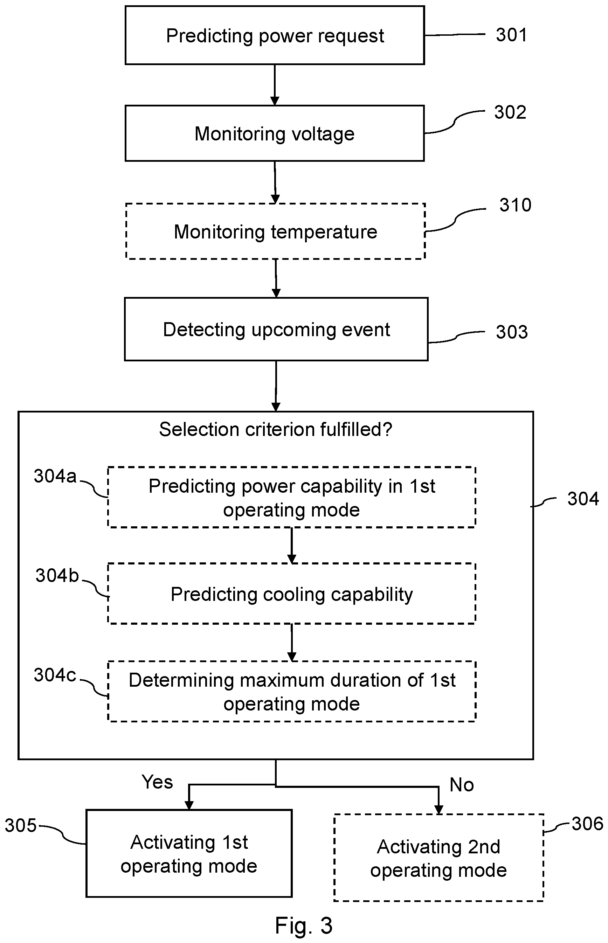

**FIG. 3** illustrates a method for controlling the power system 2 according to an example of the disclosure. The method comprises the actions listed below, that may be performed by the processing circuitry of the control device 1. Optional actions are marked by dashed lines in FIG. 3.

**Action 301:** Predicting a power request for power delivery from the fuel cell system 5. The prediction of the power request may be based on vehicle and route related information received by the control device 1, such as traffic information for an expected travelling route of the vehicle 100 during a future prediction horizon, terrain information for the expected travelling route, topographic information for the expected travelling route, weather information for the expected travelling route, speed limitations along the expected travelling route, road conditions along the expected travelling route, vehicle speed, and vehicle gross weight information; and using said received vehicle and route related information for predicting the power request during the prediction horizon. Such data, may, by way of example, be received from the navigation system 6 of the vehicle and/or from other onboard and/or offboard data sources. In other examples, historic data relating to power consumption of the vehicle may be used for the prediction. For example, the vehicle 100 may travel along a known travelling route where data associated with power consumption have previously been collected, such that the power request may be based on the previously collected data. The predicted power request may be understood as a sequence of instantaneous power requests at given time instants over a prediction horizon defined in terms of time or distance. For a vehicle, the prediction horizon may typically correspond to a distance of a few kilometers, such as 2-10 km. The prediction of the power request may typically be performed continually, so that, e.g., the average predicted power request is a moving average value updated at each prediction instant.

The power request may further be predicted based on battery information received from the electric energy storage system 30, such as from a battery control unit. The battery information may be indicative of at least one of a current SoC and an expected energy capacity of the electric energy storage system 30 during the prediction horizon.

**Action 302:** Monitoring an operating voltage of the power system 2, i.e., an operating voltage of the fuel cell system 5 or of the electric energy storage system 30. The monitoring may be realized by continuously, in the processing circuitry, receiving data relating to the operating voltage from the electric energy storage system 30 and/or from the fuel cell system 5, such as from the power converter 20, and/or from a voltmeter arranged to measure the operating voltage at the busbar arrangement 12. The operating voltage corresponds to an output voltage of the power converter 20 and of the electric energy storage system 30. The monitored operating voltage may, together with the predicted power request, be used to predict how the operating voltage will change over the prediction horizon.

**Action 303:** Detecting, based on the monitored operating voltage, an upcoming event during which a power capability of the fuel cell system 5 is expected to be insufficient to deliver power in accordance with the predicted power request. Such an upcoming event may typically be an uphill road segment within the prediction horizon, during which a high output power from the fuel cell system 5 will be needed to comply with the power request. For example, the monitored operating voltage may indicate that the SoC of the electric energy storage system 30 is currently low. The processing circuitry may be configured to detect the upcoming event by predicting an expected operating voltage of the power system 2 during the upcoming event, since the operating voltage is largely depending on the SoC of the electric energy storage system 30. The prediction of the expected operating voltage may be based on the monitored operating voltage, indicative of the SoC, and the predicted power request, in turn based on e.g. a topography along the expected travelling route. The upcoming event may be defined in terms of points or intervals along the expected travelling route of the vehicle 100.

**Action 304:** Determining if a selection criterion for selecting a first operating mode of the fuel cell system 5 during the upcoming event is fulfilled. In the first operating mode, a temporarily increased output current from the fuel cell system 5 is enabled to comply with the predicted power request. The first operating mode may be referred to as a power boost mode. The first operating mode may enable the increased output current, even though it may result in that a temperature of the power and distribution circuitry 3 increases above a nominal temperature thereof. Hence, in the first operating mode, the fuel cell system 5 may temporarily be operated at a temperature above the nominal temperature of the power conversion and distribution circuitry 3. It may further be operated at an operating voltage below its nominal operating voltage. With reference to FIG. 4, the monitored operating voltage V of the power system 2 may in the first operating mode be below the nominal operating voltage range V_nom_FCS of the fuel cell system 5, hence it is within the low-voltage range V_low.

**Action 305:** Activate the first operating mode in response to determining that the selection criterion is fulfilled. The activation may be scheduled to take place during the detected upcoming event. The activation of the first operating mode, providing a power boost, may result in that the power request can be complied with during the upcoming event, at the cost of a temporarily increased temperature of the power conversion and distribution circuitry 3.

**Action 310:** Monitoring a temperature of the power conversion and distribution circuitry 3. The monitoring may be realized by continuously, in the processing circuitry, receiving temperature data relating to the temperature of the busbar arrangement 12 from the first temperature sensor 11, and/or temperature data relating to the temperature of the coolant supply to the power converter 20 from the second temperature sensor 13. The first and/or second temperature sensor(s) 11, 13 may measure the temperature and send the measurement data to the control device 1.

The processing circuitry may in the action 304 be configured to determine if the selection criterion is fulfilled by carrying out at least some of the actions 304a-c listed below.

**Action 304a:** Predicting a power capability of the fuel cell system 5 in the first operating mode. In this action, the maximum amount of electric power that the fuel cell system 5 can generate and deliver during the upcoming event, if operated in the first operating mode, is calculated. This amount of power may, e.g., be determined such that thermal boundaries of the power conversion and distribution circuitry 3 are not violated. It may, e.g., depend on fuel cell stack type and size, fuel supply rate, ambient conditions such as ambient temperature and pressure, state-of-health of the fuel cell system 5, etc.

**Action 304b:** Predicting a cooling capability for cooling of the power conversion and distribution circuitry 3 during the upcoming event. The cooling capability refers to the amount of cooling that the cooling system 50 is able to provide, i.e., how much heat it is able to remove from the power conversion and distribution circuitry 3 during the upcoming event. It may, by way of example, depend on the type and amount of cooling medium, the heat exchange efficiency, flow rate within the cooling system, ambient temperature, etc. When the cooling system 50 is shared with other components of the vehicle 100, the cooling capability may also depend on cooling needs of those other components during the upcoming event. The cooling capability may hence be determined based on the design of the cooling system 50 and the ambient conditions, such as ambient temperature and pressure, and on vehicle speed. It may, e.g., be determined using a thermal model of the cooling system 50.

**Action 304c**: Determining a maximum duration of the first operating mode, e.g., based on the predicted cooling capability. i.e., how long the fuel cell system is expected to be able to be operated in the first operating mode without exceeding a defined temperature range of the power conversion and distribution circuitry 3. The maximum duration may be determined by predicting a point in time at which the temperature of the power conversion and distribution circuitry 3 is expected to reach a predetermined temperature threshold above the nominal temperature of the power conversion and distribution circuitry 3. The maximum duration may be determined as the time interval between exceeding the nominal temperature and reaching said point in time. The maximum duration will increase with increased cooling capability and may thus be determined based on the predicted cooling capability. It may further be based on the monitored operating voltage and/or temperature. The lower the operating voltage, the faster the temperature increases, resulting in a shorter maximum duration of the first operating mode. Hence, the duration increases with operating voltage, given that the cooling capability is constant. When the cooling system 50 is shared with other components of the vehicle 100, the cooling capability and hence the maximum duration may be increased by, if possible, prioritizing cooling of the power conversion and distribution circuitry 3 above the cooling of at least some of the other components during the upcoming event.

The selection criterion for selecting the first operating mode may be considered fulfilled when the predicted power capability and the determined maximum duration are sufficient to comply with the predicted power request during the upcoming event.

In response to determining in the action 304 that the selection criterion is not fulfilled, the method may comprise an **action 306** of activating a second operating mode in which power produced by the fuel cell system 5 is used for charging of the electric energy storage system 30 prior to the detected upcoming event. The second operating mode may be activated when the power system 2 will not be able to meet the power request during the upcoming event even if additional cooling is provided, such as if cooling of the power conversion and distribution circuitry 3 can be prioritized during the upcoming event. In this case, the fuel cell system 5 may be used to charge the electric energy storage system 30 prior to the upcoming event to improve the possibilities of being able to comply with the power request during the upcoming event. However, if it is still not possible to comply with the power request during the upcoming event, a derating of the fuel cell system 5 may be necessary, limiting its output current to avoid overheating of the power conversion and distribution circuitry 3.

**FIG. 5** illustrates an example scenario in which a vehicle 100, powered by the power system 2 as illustrated in FIG. 2, is travelling along a travelling route 200. The power request along the travelling route 200 is continually predicted based on vehicle data and information from the navigation system 6 of the vehicle 100, using e.g. map data to foresee a topography along the expected travelling route 200. At the same time, the operating voltage of the power system 2 is continually monitored. A steep uphill road section 201 is detected along the expected travelling route 200. The gradient along the uphill road section 201 together with the desired vehicle speed, the vehicle weight, and the current operating voltage of the power system 2, are used to predict the power request for power delivery from the fuel cell system 5 along the steep uphill road section 201. The predicted power request is the power required from the fuel cell system 5 for travelling up the uphill road section 201 at the desired vehicle speed, given the SoC of the electric energy storage system 30 as determined based on the monitored operating voltage of the power system 2. In the illustrated scenario, it is detected, based on the predicted power request and the operating voltage, that the fuel cell system 5 will not be able to comply with the predicted power request during the uphill road section 201 unless a temporary overheating of the power conversion and distribution circuitry 3 can be allowed. Hence, if no action is taken, the fuel cell system 5 will be derated during the uphill road section 201.

To determine if the temporary overheating of the power conversion and distribution circuitry 3 is allowed, and if such a temporary overheating will be sufficient to comply with the power request, the selection criterion for selecting the first operating mode, i.e., the power boost mode, is assessed. The selection criterion may be assessed in several steps.

First, the power capability of the fuel cell system 5 in the first operating mode, allowing a temporarily increased output current and a consequently increased temperature of the power conversion and distribution circuitry 3, is predicted. If it is determined that the power capability is sufficient and that the predetermined temperature threshold of the power conversion and distribution circuitry 3 will not be exceeded during the uphill road section 201, the selection criterion is fulfilled and the first operating mode can be activated during the uphill road section 201. In this case, the duration of the first operating mode is sufficient without any additional cooling of the power conversion and distribution circuitry 3.

Second, if it is determined that the duration of the first operating mode is insufficient to be able to comply with the power request along the uphill road section 201 with a current cooling capacity of the cooling system 50, it is determined if additional cooling may lead to a sufficiently prolonged duration of the first operating mode to comply with the power request. If it is determined that, with additional cooling, the cooling capability is sufficient to prolong the duration of the first operating mode such that the vehicle 100 may travel through the uphill road section 201 without severe overheating of the power conversion and distribution circuitry 3, the selection criterion for selecting the first operating mode is fulfilled. With additional cooling allocated to the power conversion and distribution circuitry 3, the first operating mode may be activated when reaching the uphill road section 201.

Third, if it is determined that even with additional cooling, the maximum duration of the first operating mode is not sufficient to comply with the power request throughout the uphill road section 201, the second operating mode is activated prior to reaching the uphill road section 201. At least some of the electric power generated by the fuel cell system 5 is directed to the electric energy storage system 30, such that its SoC may increase, and the operating voltage may consequently also be increased.

If sufficient foresight is used in the prediction of the power request, situations in which the fuel cell system 5 must be derated during events such as steep uphill climbs may be avoided.

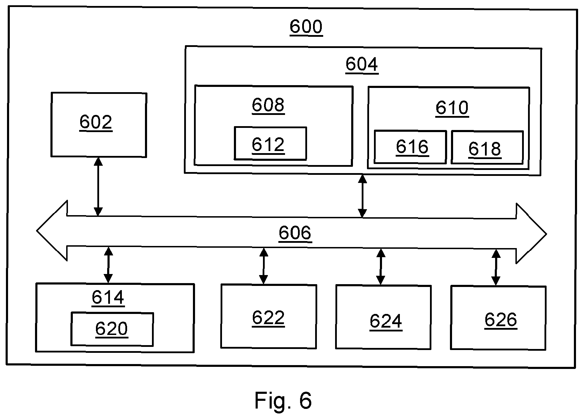

**FIG. 6** is a schematic diagram of a computer system **600** for implementing examples disclosed herein, such as in the electronic control unit 1 illustrated in FIG. 2. The computer system **600** is adapted to execute instructions from a computer-readable medium to perform these and/or any of the functions or processing described herein. The computer system **600** may be connected (e.g., networked) to other machines in a LAN (Local Area Network), LIN (Local Interconnect Network), automotive network communication protocol (e.g., FlexRay), an intranet, an extranet, or the Internet. While only a single device is illustrated, the computer system **600** may include any collection of devices that individually or jointly execute a set (or multiple sets) of instructions to perform any one or more of the methodologies discussed herein. Accordingly, any reference in the disclosure and/or claims to a computer system, computing system, computer device, computing device, control system, control unit, electronic control unit (ECU), processor device, processing circuitry, etc., includes reference to one or more such devices to individually or jointly execute a set (or multiple sets) of instructions to perform any one or more of the methodologies discussed herein. For example, control system may include a single control unit or a plurality of control units connected or otherwise communicatively coupled to each other, such that any performed function may be distributed between the control units as desired. Further, such devices may communicate with each other or other devices by various system architectures, such as directly or via a Controller Area Network (CAN) bus, etc.

The computer system **600** may comprise at least one computing device or electronic device capable of including firmware, hardware, and/or executing software instructions to implement the functionality described herein. The computer system **600** may include processing circuitry **602** (e.g., processing circuitry including one or more processor devices or control units), a memory **604,** and a system bus **606.** The computer system **600** may include at least one computing device having the processing circuitry **602.** The system bus **606** provides an interface for system components including, but not limited to, the memory **604** and the processing circuitry **602.** The processing circuitry **602** may include any number of hardware components for conducting data or signal processing or for executing computer code stored in memory **604.** The processing circuitry **602** may, for example, include a general-purpose processor, an application specific processor, a Digital Signal Processor (DSP), an Application Specific Integrated Circuit (ASIC), a Field Programmable Gate Array (FPGA), a circuit containing processing components, a group of distributed processing components, a group of distributed computers configured for processing, or other programmable logic device, discrete gate or transistor logic, discrete hardware components, or any combination thereof designed to perform the functions described herein. The processing circuitry **602** may further include computer executable code that controls operation of the programmable device.

The system bus **606** may be any of several types of bus structures that may further interconnect to a memory bus (with or without a memory controller), a peripheral bus, and/or a local bus using any of a variety of bus architectures. The memory **604** may be one or more devices for storing data and/or computer code for completing or facilitating methods described herein. The memory **604** may include database components, object code components, script components, or other types of information structure for supporting the various activities herein. Any distributed or local memory device may be utilized with the systems and methods of this description. The memory **604** may be communicably connected to the processing circuitry **602** (e.g., via a circuit or any other wired, wireless, or network connection) and may include computer code for executing one or more processes described herein. The memory **604** may include non-volatile memory **608** (e.g., read-only memory (ROM), erasable programmable read-only memory (EPROM), electrically erasable programmable read-only memory (EEPROM), etc.), and volatile memory **610** (e.g., random-access memory (RAM)), or any other medium which can be used to carry or store desired program code in the form of machine-executable instructions or data structures and which can be accessed by a computer or other machine with processing circuitry **602.** A basic input/output system (BIOS) **612** may be stored in the non-volatile memory **608** and can include the basic routines that help to transfer information between elements within the computer system **600.**

The computer system **600** may further include or be coupled to a non-transitory computer-readable storage medium such as the storage device **614,** which may comprise, for example, an internal or external hard disk drive (HDD) (e.g., enhanced integrated drive electronics (EIDE) or serial advanced technology attachment (SATA)), HDD (e.g., EIDE or SATA) for storage, flash memory, or the like. The storage device **614** and other drives associated with computer-readable media and computer-usable media may provide non-volatile storage of data, data structures, computer-executable instructions, and the like.

Computer-code which is hard or soft coded may be provided in the form of one or more modules. The module(s) can be implemented as software and/or hard-coded in circuitry to implement the functionality described herein in whole or in part. The modules may be stored in the storage device **614** and/or in the volatile memory **610,** which may include an operating system **616** and/or one or more program modules **618.** All or a portion of the examples disclosed herein may be implemented as a computer program **620** stored on a transitory or non-transitory computer-usable or computer-readable storage medium (e.g., single medium or multiple media), such as the storage device **614,** which includes complex programming instructions (e.g., complex computer-readable program code) to cause the processing circuitry **602** to carry out actions described herein. Thus, the computer-readable program code of the computer program **620** can comprise software instructions for implementing the functionality of the examples described herein when executed by the processing circuitry **602.** In some examples, the storage device **614** may be a computer program product (e.g., readable storage medium) storing the computer program **620** thereon, where at least a portion of a computer program **620** may be loadable (e.g., into a processor) for implementing the functionality of the examples described herein when executed by the processing circuitry **602.** The processing circuitry **602** may serve as a controller or control system for the computer system **600** that is to implement the functionality described herein.

The computer system **600** may include an input device interface **622** configured to receive input and selections to be communicated to the computer system **600** when executing instructions, such as from a keyboard, mouse, touch-sensitive surface, etc. Such input devices may be connected to the processing circuitry **602** through the input device
interface **622** coupled to the system bus **606** but can be connected through other interfaces, such as a parallel port, an Institute of Electrical and Electronic Engineers (IEEE) 1394 serial port, a Universal Serial Bus (USB) port, an IR interface, and the like. The computer system **600** may include an output device interface **624** configured to forward output, such as to a display, a video display unit (e.g., a liquid crystal display (LCD) or a cathode ray tube (CRT)). The computer system **600** may include a communications interface **626** suitable for communicating with a network as appropriate or desired.

The operational actions described in any of the exemplary aspects herein are described to provide examples and discussion. The actions may be performed by hardware components, may be embodied in machine-executable instructions to cause a processor to perform the actions, or may be performed by a combination of hardware and software. Although a specific order of method actions may be shown or described, the order of the actions may differ. In addition, two or more actions may be performed concurrently or with partial concurrence.

In the following, a list of numbered examples of the disclosure is presented.

Example 1. A computer system (1, 600) comprising processing circuitry (602) configured to control a power system (2) comprising a fuel cell system (5) and an electric energy storage system (30), the fuel cell system (5) comprising a power conversion and distribution circuitry (3) configured to convert and deliver electric power generated by the fuel cell system (5) to the electric energy storage system (30) and to a power consumer (40), the processing circuitry (602) being configured to:
- predict a power request for power delivery from the fuel cell system (5),
- monitor an operating voltage of the power system (2),
- detect, based on the monitored operating voltage, an upcoming event during which a power capability of the fuel cell system (5) is expected to be insufficient to deliver power in accordance with the predicted power request,
- determine if a selection criterion for selecting a first operating mode of the fuel cell system (5) during the upcoming event is fulfilled, wherein, in the first operating mode, a temporarily increased output current from the fuel cell system (5) is enabled to comply with the predicted power request, and
- activate the first operating mode in response to determining that the selection criterion is fulfilled.

Example 2. The computer system of example 1, wherein the processing circuitry is configured to determine if the selection criterion is fulfilled by:
- predicting a power capability of the fuel cell system (5) in the first operating mode,
- determining a maximum duration of the first operating mode,
wherein the selection criterion is fulfilled when the predicted power capability and the determined maximum duration are sufficient to comply with the predicted power request during the upcoming event.

Example 3. The computer system of example 2, wherein the processing circuitry is further configured to determine if the selection criterion is fulfilled by:
- predicting a cooling capability for cooling of the power conversion and distribution circuitry (3) during the upcoming event,
wherein the determining of the maximum duration is further based on the predicted cooling capability.

Example 4. The computer system of example 2 or 3, wherein the processing circuitry is configured to determine the maximum duration by predicting a point in time at which a temperature of the power conversion and distribution circuitry (3) is expected to reach a predetermined temperature threshold above the nominal temperature of the power conversion and distribution circuitry (3).

Example 5. The computer system of any one of the preceding examples, wherein the processing circuitry is configured to, in response to determining that the selection criterion is not fulfilled:
- activate a second operating mode in which power produced by the fuel cell system (5) is used for charging of the electric energy storage system (30) prior to the detected upcoming event.

Example 6. The computer system of any one of the preceding examples, wherein, in the first operating mode, the fuel cell system (5) is temporarily operated at a temperature above the nominal temperature of the power conversion and distribution circuitry (3) and/or at an operating voltage below a nominal operating voltage of the fuel cell system (5).

Example 7. The computer system of any one of the preceding examples, wherein the processing circuitry is configured to detect the upcoming event by predicting, based on the monitored operating voltage and the predicted power request, an expected operating voltage of the power system (2) during the upcoming event.

Example 8. The computer system of any one of the preceding examples, wherein the processing circuitry is further configured to monitor a temperature of the power conversion and distribution circuitry (3).

Example 9. A power system (2) comprising a fuel cell system (5), an electric energy storage system (30), and the computer system (1) of any one of the preceding examples, the fuel cell system (5) comprising a power conversion and distribution circuitry (3) configured to convert and deliver electric power generated by the fuel cell system (5) to the electric energy storage system (30) and to a power consumer (40).

Example 10. A vehicle (100) comprising the power system (2) of example 9.

Example 11. A computer-implemented method for controlling a power system (2) comprising a fuel cell system (5) and an electric energy storage system (30), the fuel cell system (5) comprising a power conversion and distribution circuitry (3) configured to convert and deliver electric power generated by the fuel cell system (5) to the electric energy storage system (30) and to a power consumer (40), the method comprising:
- predicting (301), by processing circuitry (602) of a computer system (1, 600), a power request for power delivery from the fuel cell system (5),
- monitoring (302), by the processing circuitry, an operating voltage of the power system (2),
- detecting (303), by the processing circuitry, based on the monitored operating voltage, an upcoming event during which a power capability of the fuel cell system (5) is expected to be insufficient to deliver power in accordance with the predicted power request,
- determining (304), by the processing circuitry, if a selection criterion for selecting a first operating mode of the fuel cell system (10) during the upcoming event is fulfilled, wherein, in the first operating mode, a temporarily increased output current from the fuel cell system (5) is enabled to comply with the predicted power request, and
- activating (305), by the processing device, the first operating mode in response to determining that the selection criterion is fulfilled.

Example 12. The method of example 11, wherein the determining (304) if the selection criterion is fulfilled comprises:
- predicting a power capability of the fuel cell system (5) in the first operating mode,
- determining a maximum duration of the first operating mode,
wherein the selection criterion is fulfilled when the predicted power capability and the determined maximum duration are sufficient to comply with the predicted power request during the upcoming event.

Example 13. The method of example 12, wherein the determining (304) if the selection criterion is fulfilled further comprises:
- predicting a cooling capability for cooling of the power conversion and distribution circuitry (3) during the upcoming event,
wherein the determining of the maximum duration is further based on the predicted cooling capability.

Example 14. The method of example 12 or 13, wherein the determining of the maximum duration comprises predicting a point in time at which a temperature of the power conversion and distribution circuitry (3) is expected to reach a predetermined temperature threshold above the nominal temperature of the power conversion and distribution circuitry (3).

Example 15. The method of any one of examples 11-14, wherein, in response to determining that the selection criterion is not fulfilled, the method comprises:
- activating (306), by the processing circuitry, a second operating mode in which power produced by the fuel cell system (5) is used for charging of the electric energy storage system (30) prior to the detected upcoming event.

Example 16. The method of any one of examples 11-15, wherein, in the first operating mode, the fuel cell system (5) is temporarily operated at a temperature above the nominal temperature of the power conversion and distribution circuitry (3) and/or at an operating voltage below a nominal voltage of the fuel cell system (5).

Example 17. The method of any one of examples 11-16, wherein the detecting of the upcoming event comprises predicting, based on the monitored operating voltage and the predicted power request, an expected operating voltage of the power system (2) during the upcoming event.

Example 18. The method of any one of examples 11-17, further comprising monitoring (310) a temperature of the power conversion and distribution circuitry (3).

Example 19. A computer program product comprising program code for performing, when executed by the processing circuitry, the method of any of examples 11-18.

Example 20. A non-transitory computer-readable storage medium comprising instructions, which when executed by the processing circuitry, cause the processing circuitry to perform the method of any of examples 11-18.

The terminology used herein is for the purpose of describing particular aspects only and is not intended to be limiting of the disclosure. As used herein, the singular forms "a," "an," and "the" are intended to include the plural forms as well, unless the context clearly indicates otherwise. As used herein, the term "and/or" includes any and all combinations of one or more of the associated listed items. It will be further understood that the terms "comprises," "comprising," "includes," and/or "including" when used herein specify the presence of stated features, integers, actions, steps, operations, elements, and/or components, but do not preclude the presence or addition of one or more other features, integers, actions, steps, operations, elements, components, and/or groups thereof.

It will be understood that, although the terms first, second, etc., may be used herein to describe various elements, these elements should not be limited by these terms. These terms are only used to distinguish one element from another. For example, a first element could be termed a second element, and, similarly, a second element could be termed a first element without departing from the scope of the present disclosure.

Relative terms such as "below" or "above" or "upper" or "lower" or "horizontal" or "vertical" may be used herein to describe a relationship of one element to another element as illustrated in the Figures. It will be understood that these terms and those discussed above are intended to encompass different orientations of the device in addition to the orientation depicted in the Figures. It will be understood that when an element is referred to as being "connected" or "coupled" to another element, it can be directly connected or coupled to the other element, or intervening elements may be present. In contrast, when an element is referred to as being "directly connected" or "directly coupled" to another element, there are no intervening elements present.

Unless otherwise defined, all terms (including technical and scientific terms) used herein have the same meaning as commonly understood by one of ordinary skill in the art to which this disclosure belongs. It will be further understood that terms used herein should be interpreted as having a meaning consistent with their meaning in the context of this specification and the relevant art and will not be interpreted in an idealized or overly formal sense unless expressly so defined herein.

It is to be understood that the present disclosure is not limited to the aspects described above and illustrated in the drawings; rather, the skilled person will recognize that many changes and modifications may be made within the scope of the present disclosure and appended claims. In the drawings and specification, there have been disclosed aspects for purposes of illustration only and not for purposes of limitation, the scope of the disclosure being set forth in the following claims.

## Claims

1. A computer system (1, 600) comprising processing circuitry (602) configured to control a power system (2) comprising a fuel cell system (5) and an electric energy storage system (30), the fuel cell system (5) comprising a power conversion and distribution circuitry (3) configured to convert and deliver electric power generated by the fuel cell system (5) to the electric energy storage system (30) and to a power consumer (40), the processing circuitry (602) being configured to:
- predict a power request for power delivery from the fuel cell system (5),
- monitor an operating voltage of the power system (2),
- detect, based on the monitored operating voltage, an upcoming event during which a power capability of the fuel cell system (5) is expected to be insufficient to deliver power in accordance with the predicted power request,
- determine if a selection criterion for selecting a first operating mode of the fuel cell system (5) during the upcoming event is fulfilled, wherein, in the first operating mode, a temporarily increased output current from the fuel cell system (5) is enabled to comply with the predicted power request, and
- activate the first operating mode in response to determining that the selection criterion is fulfilled.

2. The computer system of claim 1, wherein the processing circuitry is configured to determine if the selection criterion is fulfilled by:
- predicting a power capability of the fuel cell system (5) in the first operating mode,
- determining a maximum duration of the first operating mode,
wherein the selection criterion is fulfilled when the predicted power capability and the determined maximum duration are sufficient to comply with the predicted power request during the upcoming event.

3. The computer system of claim 2, wherein the processing circuitry is further configured to determine if the selection criterion is fulfilled by:
- predicting a cooling capability for cooling of the power conversion and distribution circuitry (3) during the upcoming event,
wherein the determining of the maximum duration is further based on the predicted cooling capability.

4. The computer system of claim 2 or 3, wherein the processing circuitry is configured to determine the maximum duration by predicting a point in time at which a temperature of the power conversion and distribution circuitry (3) is expected to reach a predetermined temperature threshold above the nominal temperature of the power conversion and distribution circuitry (3).

5. The computer system of any one of the preceding claims, wherein the processing circuitry is configured to, in response to determining that the selection criterion is not fulfilled:
- activate a second operating mode in which power produced by the fuel cell system (5) is used for charging of the electric energy storage system (30) prior to the detected upcoming event.

6. The computer system of any one of the preceding claims, wherein, in the first operating mode, the fuel cell system (5) is temporarily operated at a temperature above the nominal temperature of the power conversion and distribution circuitry (3) and/or at an operating voltage below a nominal operating voltage of the fuel cell system (5).

7. The computer system of any one of the preceding claims, wherein the processing circuitry is configured to detect the upcoming event by predicting, based on the monitored operating voltage and the predicted power request, an expected operating voltage of the power system (2) during the upcoming event.

8. The computer system of any one of the preceding claims, wherein the processing circuitry is further configured to monitor a temperature of the power conversion and distribution circuitry (3).

9. A power system (2) comprising a fuel cell system (5), an electric energy storage system (30), and the computer system (1) of any one of the preceding claims, the fuel cell system (5) comprising a power conversion and distribution circuitry (3) configured to convert and deliver electric power generated by the fuel cell system (5) to the electric energy storage system (30) and to a power consumer (40).

10. A vehicle (100) comprising the power system (2) of claim 9.

11. A computer-implemented method for controlling a power system (2) comprising a fuel cell system (5) and an electric energy storage system (30), the fuel cell system (5) comprising a power conversion and distribution circuitry (3) configured to convert and deliver electric power generated by the fuel cell system (5) to the electric energy storage system (30) and to a power consumer (40), the method comprising:
- predicting (301), by processing circuitry (602) of a computer system (1, 600), a power request for power delivery from the fuel cell system (5),
- monitoring (302), by the processing circuitry, an operating voltage of the power system (2),
- detecting (303), by the processing circuitry, based on the monitored operating voltage, an upcoming event during which a power capability of the fuel cell system (5) is expected to be insufficient to deliver power in accordance with the predicted power request,
- determining (304), by the processing circuitry, if a selection criterion for selecting a first operating mode of the fuel cell system (10) during the upcoming event is fulfilled, wherein, in the first operating mode, a temporarily increased output current from the fuel cell system (5) is enabled to comply with the predicted power request, and
- activating (305), by the processing device, the first operating mode in response to determining that the selection criterion is fulfilled.

12. The method of claim 11, wherein the determining (304) if the selection criterion is fulfilled comprises:
- predicting a power capability of the fuel cell system (5) in the first operating mode,
- determining a maximum duration of the first operating mode,
wherein the selection criterion is fulfilled when the predicted power capability and the determined maximum duration are sufficient to comply with the predicted power request during the upcoming event.

13. The method of any one of claims 11-12, wherein, in response to determining that the selection criterion is not fulfilled, the method comprises:
- activating (306), by the processing circuitry, a second operating mode in which power produced by the fuel cell system (5) is used for charging of the electric energy storage system (30) prior to the detected upcoming event.

14. A computer program product comprising program code for performing, when executed by the processing circuitry, the method of any of claims 11-13.

15. A non-transitory computer-readable storage medium comprising instructions, which when executed by the processing circuitry, cause the processing circuitry to perform the method of any of claims 11-13.
